# EUROPÄISCHE PATENTSCHRIFT

(11) **EP 3 235 667 B1**
(45) Veröffentlichungstag und Bekanntmachung des Hinweises auf die Patenterteilung: **02.10.2019**
(21) Anmeldenummer: 17167453.4
(22) Anmeldetag: 21.04.2017
(51) Int. Cl.: B60G 7/00

(54) **LENKERKONSTRUKTION FÜR EIN KRAFTFAHRZEUG, INSBESONDERE LÄNGSLENKERKONSTRUKTION**
SUSPENSION ARM FOR A MOTOR VEHICLE, IN PARTICULAR LONGITUDIAL SUSPENSION ARM
BRAS DE SUSPENSION POUR UN VÉHICULE AUTOMOBILE, EN PARTICULIER BRAS DE SUSPENSION LONGITUDINAL

(30) Priorität: 21.04.2016 DE 102016004833
(43) Veröffentlichungstag der Anmeldung: 25.10.2017
(73) Patentinhaber: MAN Truck & Bus SE, 80995 München (DE)
(72) Erfinder: Bornemann, Krino, 39326 Klein Ammesleben (DE); Elbs, Norbert, 80639 München (DE); Rübsamen, Susanne, 80687 München (DE); Herrla, Florian, 85579 Neubiberg (DE)
(74) Vertreter: v. Bezold & Partner Patentanwälte - PartG mbB

(56) Entgegenhaltungen:
- EP-A1- 2 711 214
- WO-A1-2005/039902
- CN-U- 203 805 653
- DE-A1-102008 015 705
- DE-A1-102010 020 520
- DE-A1-102011 084 165
- DE-A1-102013 209 553
- FR-A1- 2 456 895
- FR-A1- 2 862 559
- KR-A- 20150 024 106
- US-A- 4 657 424
- US-A- 5 059 053
- US-A1- 2003 160 414
- Uwe Eggers ET AL: "Werkstoff- und Halbzeugtechnologien" In: "Leichtbau in der Fahrzeugtechnik", 31. Dezember 2014 (2014-12-31), Springer Fachmedien Wiesbaden, Wiesbaden, XP055380495, ISBN: 978-3-8348-2110-2 Seiten 595-596, DOI: 10.1007/978-3-8348-2110-2, * Seiten 595-595 *

## Beschreibung

Die Erfindung betrifft eine Lenkerkonstruktion für ein Kraftfahrzeug, vorzugsweise eine Längslenkerkonstruktion.

Längslenkerkonstruktionen für Kraftfahrzeuge sind im Stand der Technik in den unterschiedlichsten Ausführungsformen bekannt, wobei hierzu beispielhaft auf die Dokumente DE 10 2007 022 283 A1 und DE 10 2014 211 051 A1 verwiesen werden kann. Aus letztgenanntem Dokument ist bereits bekannt, Blattfeder-Längslenker aus faserverstärktem Kunststoff auszubilden.

Das Dokument KR 10-2015-0024 106 offenbart eine Lenkerkonstruktion entsprechend des Offerbegriffs des Anspruchs 1. Die Aufgabe der Erfindung ist es, eine Lenkerkonstruktion mit einer besonders einfachen und haltbaren Verbindung zwischen dem Lagerabschnitt und dem Koppelelement zu schaffen.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Lenkerkonstruktion für ein Kraftfahrzeug, z. B. einen Personenkraftwagen oder ein Nutzfahrzeug, insbesondere ein Lastkraftwagen oder ein Omnibus.

Die Lenkerkonstruktion ist vorzugsweise als Längslenkerkonstruktion ausgeführt.

Die Lenkerkonstruktion umfasst einen ersten Lagerabschnitt (z. B. Lageraufnahme), einen zweiten Lagerabschnitt (z. B. Lageraufnahme) und ein Kopplungselement, das sich zwischen dem ersten Lagerabschnitt und dem zweiten Lagerabschnitt erstreckt und zur zweckmäßig mittelbaren oder unmittelbaren Verbindung des ersten Lagerelements und des zweiten Lagerelements dient.

Die Lenkerkonstruktion zeichnet sich insbesondere dadurch aus, dass im Verbindungsbereich zur Verbindung des ersten Lagerabschnitts und des Kopplungselements zumindest ein Schlitz ausgebildet ist, wodurch insbesondere ein Fertigungstoleranz-Ausgleich ermöglicht wird, zweckmäßig in Umfangsrichtung des Kopplungselements. Alternativ oder ergänzend zeichnet sich die Lenkerkonstruktion insbesondere dadurch aus, dass die Lenkerkonstruktion in Differentialbauweise ausgebildet ist, vorzugsweise der erste Lagerabschnitt und/oder der zweite Lagerabschnitt aus einem metallischen Material (z. B. Aluminium oder einer Aluminiumlegierung) ausgebildet ist und das Kopplungselement aus einem Faserkunststoffverbund ausgebildet ist (z. B. faserverstärkter Kunststoff, insbesondere CFK oder GFK).

Die Lenkerkonstruktion ermöglicht vorzugsweise einen Ausgleich von Fertigungstoleranzen, zweckmäßig in Umfangsrichtung des Kopplungselements, eine variable, an die spezielle Anwendung anpassbare Bauteillänge, die Verwendung preiswerter Standard-Elastomerlager, eine hohe Gewichtsersparnis, eine hohe Steifigkeit/Festigkeit und/oder eine Verwendung der Lenkerkonstruktion als Zug- und/oder Druckstrebe.

Erfindungsgemäß ist im Verbindungsbereich zur Verbindung des ersten Lagerabschnitts und des Kopplungselements eine Schelle (z. B. Klemmschelle) zur zweckmäßigen Fixierung des ersten Lagerabschnitts am Kopplungselement angeordnet.

Der erste Lagerabschnitt und das Kopplungselement können z. B. aufeinander geschoben sein und/oder sich abschnittsweise überlappen, zweckmäßig im Verbindungsbereich zur Verbindung des ersten Lagerabschnitts und des Kopplungselements.

Der erste Lagerabschnitt kann insbesondere einen Teilabschnitt umfassen und der Teilabschnitt kann sich vorzugsweise in das Kopplungselement hinein erstrecken. Der Teilabschnitt ist vorzugsweise hohlprofilförmig ausgebildet, z. B. Rundrohr-förmig, Rechteck-Hohlprofilförmig etc..

Der Schlitz ist vorzugsweise im Kopplungselement ausgebildet und/oder erstreckt sich von einer Stirnseite des Kopplungselements einwärts.

Es ist möglich, dass sich der Schlitz im Wesentlichen parallel zur Längserstreckung des Kopplungselements erstreckt oder sich schräg zur Längserstreckung des Kopplungselements erstreckt.

Erfindungsgemäß ist der erste Lagerabschnitt und das Kopplungselement miteinander verklebt und/oder verpresst, wobei die Schelle zur Fixierung der Klebe- und/oder Pressverbindung dient.

Der Verbindungsbereich zur Verbindung des ersten Lagerabschnitts und des Kopplungselements umfasst insbesondere einen axialen End- und/oder Stirnseitenabschnitt des Kopplungselements.

Das Kopplungselement ist erfindungsgemäß aus einem Faserkunststoffverbund (z. B. faserverstärkter Kunststoff, z. B. GFK oder CFK) ausgebildet. Alternativ oder ergänzend kann der erste Lagerabschnitt und/oder der zweite Lagerabschnitt aus metallischem Material ausgebildet sein, vorzugsweise aus Aluminium oder einer Aluminiumlegierung. Dadurch kann die Differentialbauweise gebildet werden.

Das Kopplungselement ist vorzugsweise mittels Pultrusion (Strangziehverfahren) hergestellt. Die Schelle kann aus einem Faserkunststoffverbund (z. B. faserverstärkter Kunststoff) ausgebildet sein, als Fräsbauteil ausgebildet sein oder als Blechbauteil ausgebildet sein.

Der erste Lagerabschnitt kann z. B. einen im Wesentlichen ösenförmigen (insbesondere ringförmigen) Teilabschnitt aufweisen und/oder z. B. ein Elastomerlager tragen, vorzugsweise mittels des ösenförmigen Teilabschnitts.

Das Kopplungselement ist erfindungsgemäß als ein Hohlprofil-Element (z. B. Rund-Hohlprofil-Element oder Rechteck-Hohlprofilelement) ausgebildet. Dabei kann der Schlitz die Wandung des Hohlprofil-Elements zweckmäßig durchstoßen.

Der Schlitzgrund des Schlitzes, also ein axialer Endabschnitt des Schlitzes, kann zweckmäßig abgerundet, tropfenförmig und/oder im Wesentlichen kreis- oder halbkreisförmig ausgeführt sein.

Der Faserkunststoffverbund kann z. B. ein längsverstärktes, im Wesentlichen quasiisotropes Laminat umfassen.

Insbesondere im Verbindungsbereich zur Verbindung des ersten Lagerabschnitts und des Kopplungselements kann zweckmäßig eine Dehnschraube z. B. zur Reduzierung von Setzungserscheinungen angeordnet sein.

Im Verbindungsbereich zur Verbindung des zweiten Lagerabschnitts und des Kopplungselements kann ebenfalls zumindest ein Schlitz ausgebildet sein.

Der erste Lagerabschnitt und der zweite Lagerabschnitt und insbesondere deren Montage an das Kopplungselement sind vorzugsweise baugleich ausgeführt, so dass die hierin gemachte Offenbarung zum ersten Lagerabschnitt und dessen Montage an das Kopplungselement entsprechend für den zweiten Lagerabschnitt und dessen Montage an das Kopplungselement gilt und ebenso beanspruchbar ist.

Im Rahmen der Erfindung kann der zumindest eine Schlitz insbesondere eine Art Schlitzring-Struktur ausbilden, die im Wesentlichen kreisringförmig sein kann, aber nicht zwingend kreisringförmig sein muss.

Im Rahmen der Erfindung kann im Montagezustand, in dem der erste Lagerabschnitt an das Kopplungselement montiert ist (z. B. verpresst, verklebt und/oder Schellen-fixiert), der zumindest eine Schlitz zweckmäßig zumindest abschnittsweise geöffnet sein, so dass die Seitenwandungen des Schlitzes zumindest abschnittsweise voneinander beabstandet sind, oder zumindest abschnittsweise geschlossen sein, so dass sich die Seitenwandungen zumindest abschnittsweise kontaktieren.

Das Kopplungselement ist vorzugsweise als Hohlprofil-Element ausgebildet, vorzugsweise als Rund-Hohlprofil-Element.

Die Erfindung ist nicht auf eine Lenkerkonstruktion wie hierin offenbart beschränkt, sondern umfasst auch ein Kraftfahrzeug mit zumindest einer solchen Lenkerkonstruktion. Das Kraftfahrzeug kann z. B. ein Personenkraftfahrzeug oder ein Nutzfahrzeug, insbesondere ein Lastkraftwagen oder ein Omnibus, sein.

Die vorstehen beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine zum Teil geschnittene Seitenansicht einer Lenkerkonstruktion für ein Kraftfahrzeug gemäß einer Ausführungsform der Erfindung,
- Figur 2: zeigt eine perspektivische Ansicht der Lenkerkonstruktion der Figur 1, und
- Figur 3: zeigt eine Detailansicht eines Schlitzes der Figuren 1 und 2.

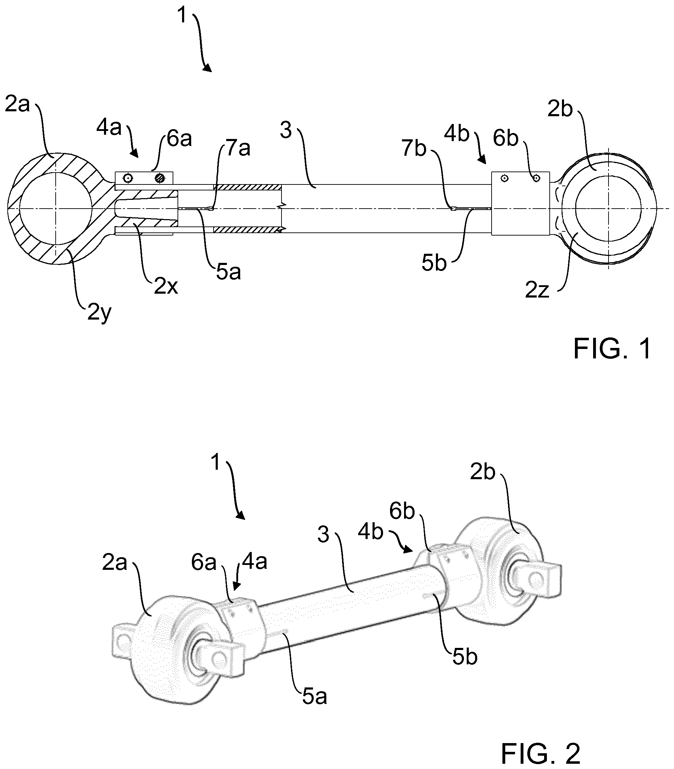

Figur 1 zeigt eine teilweise geschnittene Seitenansicht einer Lenkerkonstruktion 1 für ein Kraftfahrzeug, insbesondere eine Längslenkerkonstruktion 1.

Die Lenkerkonstruktion 1 umfasst einen ersten Lagerabschnitt 2a, einen zweiten Lagerabschnitt 2a und ein als Rund-Hohlprofil ausgebildetes Kopplungselement 3, das sich zwischen dem ersten Lagerabschnitt 2a und dem zweiten Lagerabschnitt 2b erstreckt und zur Verbindung des ersten Lagerabschnitts 2a und des zweiten Lagerabschnitts 2b dient.

Im Verbindungsbereich 4a zur Verbindung des ersten Lagerabschnitts 2a und des Kopplungselements 3 ist zumindest ein Schlitz 5a ausgebildet ist, der einen Fertigungstoleranz-Ausgleich in Umfangsrichtung des Kopplungselements 3 ermöglicht. Der Schlitz 5a ist im Kopplungselement 3 ausgebildet und erstreckt sich von einer Stirnseite des Kopplungselements 3 im Wesentlichen parallel zur Längserstreckung des Kopplungselements 3 einwärts. Ein Schlitzgrund 7a des Schlitzes 5a ist zweckmäßig abgerundet, z. B. im Wesentlichen tropfen- oder halbkreisförmig.

Der Verbindungsbereich 4a umfasst insbesondere einen axialen End-/Stirnseitenabschnitt des Kopplungselements 3.

Der erste Lagerabschnitt 2a und das Kopplungselement 3 sind im Verbindungsbereich 4a aufeinander geschoben und überlappen sich abschnittsweise. So erstreckt sich der erste Lagerabschnitt 2a mit einem hohlprofilförmigen Teilabschnitt 2x in das Kopplungselement 3 hinein. Der erste Lagerabschnitt 2a umfasst ebenfalls einen im Wesentlichen ösenförmigen Teilabschnitt 2y zum Tragen eines Elastomerlagers.

Der erste Lagerabschnitt 2a und das Kopplungselement 3 sind zweckmäßig miteinander verklebt und verpresst.

Eine Schelle 6a, insbesondere Klemmschelle 6a, im Verbindungsbereich 4a dient zur Fixierung der Klebe- und Pressverbindung. Die Schelle 6a kann aus Faserkunststoffverbund ausgebildet sein, als Fräsbauteil oder Blechbauteil ausgebildet sein.

Die Lenkerkonstruktion 1 ist in Differentialbauweise ausgebildet. Dazu sind der erste Lagerabschnitt 2a und der zweite Lagerabschnitt 2b aus einem metallischem Material, zweckmäßig Aluminium, ausgebildet, während das Kopplungselement 3 aus einem Faserkunststoffverbund ausgebildet ist, zweckmäßig einem faserverstärkten Kunststoff, z. B. GFK (Glasfaser-verstärkter Kunststoff) oder CFK (Carbonfaser-verstärkter Kunststoff).

Das Kopplungselement 3 ist vorzugsweise durch Pultrusion hergestellt.

Der in Figur 1 rechte Teil der Lenkerkonstruktion 1 ist im Wesentlichen baugleich ausgeführt wie die der in Figur 1 linke Teil der Lenkerkonstruktion 1, so dass zuvor gemachte Beschreibung sinngemäß auch für den rechten Teil der Lenkerkonstruktion 1 gilt.

So ist im Verbindungsbereich 4b zur Verbindung des zweiten Lagerabschnitts 2b und des Kopplungselements 3 ebenfalls zumindest ein Schlitz 5b ausgebildet, der einen Fertigungstoleranz-Ausgleich in Umfangsrichtung des Kopplungselements 3 ermöglicht. Der Schlitz 5b ist ebenfalls im Kopplungselement 3 ausgebildet und erstreckt sich von der anderen Stirnseite des Kopplungselements 3 im Wesentlichen parallel zur Längserstreckung des Kopplungselements 3 einwärts. Ein Schlitzgrund 7b des Schlitzes 5b ist zweckmäßig abgerundet, z. B. im Wesentlichen tropfen- oder halbkreisförmig.

Der Verbindungsbereich 4b umfasst insbesondere den anderen axialen End-/Stirnseitenabschnitt des Kopplungselements 3.

Der zweite Lagerabschnitt 2b und das Kopplungselement 3 sind im Überlappungsbereich 4b aufeinander geschoben und überlappen sich abschnittsweise. So erstreckt sich der zweite Lagerabschnitt 2b mit einem hohlprofilförmigen Teilabschnitt in das Kopplungselement 3 hinein. Der zweite Lagerabschnitt 2b umfasst ebenfalls einen im Wesentlichen ösenförmigen Teilabschnitt 2z zum Tragen eines Elastomerlagers.

Der zweite Lagerabschnitt 2b und das Kopplungselement 3 sind ebenfalls zweckmäßig miteinander verklebt und verpresst.

Eine Schelle 6b, insbesondere Klemmschelle 6b, im Verbindungsbereich 4b dient zur Fixierung der Klebe- und Pressverbindung. Die Schelle 6b kann aus einem Faserkunststoffverbund ausgebildet sein, als Fräsbauteil oder Blechbauteil ausgebildet sein.

Figur 2 zeigt eine perspektivische Ansicht der Lenkerkonstruktion 1 der Figur 1, allerdings im Gegensatz zur Figur 1 mit in den Lagerabschnitten 2a und 2b aufgenommenen Elastomerlagern.

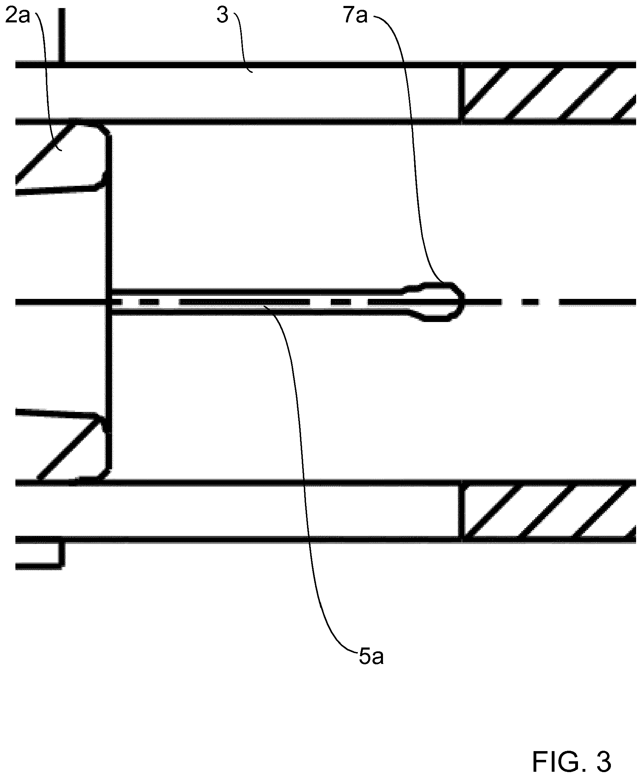

Figur 3 zeigt eine Detailansicht des Schlitzes 5a. Der Schlitzgrund 7a des Schlitzes 5a ist dabei im Wesentlichen tropfenförmig ausgebildet.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Lenkerkonstruktion, insbesondere Längslenkerkonstruktion
- 2a: Erster Lagerabschnitt
- 2x: Ringförmiger Teilabschnitt
- 2y: Ösenförmiger Teilabschnitt
- 2b: Zweiter Lagerabschnitt
- 2z: Ösenförmiger Teilabschnitt
- 3: Kopplungselement
- 4a: Verbindungsbereich
- 4b: Verbindungsbereich
- 5a: Schlitz
- 5b: Schlitz
- 6a: Schelle, insbesondere Klemmschelle
- 6b: Schelle, insbesondere Klemmschelle
- 7a: Schlitzgrund
- 7b: Schlitzgrund

## Patentansprüche

1. Lenkerkonstruktion (1) für ein Kraftfahrzeug, vorzugsweise Längslenkerkonstruktion (1), mit einem ersten Lagerabschnitt (2a), einem zweiten Lagerabschnitt (2b) und einem Kopplungselement (3), das sich zwischen dem ersten Lagerabschnitt (2a) und dem zweiten Lagerabschnitt (2b) erstreckt und zur Verbindung des ersten Lagerabschnitts (2a) und des zweiten Lagerabschnitts (2b) dient, wobei das Kopplungselment (3) aus einem Faserkunststoffverbund und als ein Hohlprofil-Element ausgebildet ist, wobei
- im Verbindungsbereich (4a) zur Verbindung des ersten Lagerabschnitts (2a) und des Kopplungselements (3) zumindest ein Schlitz (5a) ausgebildet ist
- im Verbindungsbereich (4a) zur Verbindung des ersten Lagerabschnitts (2a) und des Kopplungselements (3) eine Schelle (6a) zur Fixierung des ersten Lagerabschnitts (2a) am Kopplungselement (3) angeordnet ist
**dadurch gekennzeichnet, dass**
- der erste Lagerabschnitt (2a) und das Kopplungselement (3) miteinander verklebt und/oder verpresst sind und die Schelle (6a) zur Fixierung der Klebe- und/oder Pressverbindung dient.

2. Lenkerkonstruktion (1) nach Anspruch 1, **dadurch gekennzeichnet, dass** der erste Lagerabschnitt (2a) und das Kopplungselement (3) aufeinander geschoben sind und/oder sich abschnittsweise überlappen.

3. Lenkerkonstruktion (1) nach Anspruch 1 oder Anspruch 2, **dadurch gekennzeichnet, dass** der erste Lagerabschnitt (2a) einen Teilabschnitt (2x) umfasst und der Teilabschnitt (2x) sich in das Kopplungselement (3) hinein erstreckt und vorzugsweise hohlprofilförmig ausgestaltet.

4. Lenkerkonstruktion (1) nach einem der vorhergehenden Ansprüche, **dadurch gekennzeichnet, dass** der Schlitz (5a) im Kopplungselement (3) ausgebildet ist und/oder sich von einer Stirnseite des Kopplungselements (3) einwärts erstreckt.

5. Lenkerkonstruktion (1) nach einem der vorhergehenden Ansprüche, **dadurch gekennzeichnet, dass** der Schlitz (5a) sich im Wesentlichen parallel zur Längserstreckung des Kopplungselements (3) oder schräg zur Längserstreckung des Kopplungselements (3) erstreckt.

6. Lenkerkonstruktion (1) nach einem der vorhergehenden Ansprüche, **dadurch gekennzeichnet, dass** der Verbindungsbereich (4a) zur Verbindung des ersten Lagerabschnitts (2a) und des Kopplungselements (3) einen axialen End- oder Stirnseitenabschnitt des Kopplungselements (3) umfasst.

7. Lenkerkonstruktion (1) nach einem der vorhergehenden Ansprüche, **dadurch gekennzeichnet, dass** der erste Lagerabschnitt (2a) und/oder der zweite Lagerabschnitt (2b) aus metallischem Material ausgebildet ist, vorzugsweise aus Aluminium oder einer Aluminiumlegierung.

8. Lenkerkonstruktion (1) nach einem der vorhergehenden Ansprüche, **dadurch gekennzeichnet, dass** das Kopplungselement (3) mittels Pultrusion hergestellt ist.

9. Lenkerkonstruktion (1) nach einem der vorhergehenden Ansprüche, **dadurch gekennzeichnet, dass** die Schelle (6a) aus einem Faserkunststoffverbund ausgebildet ist, als Fräsbauteil oder Blechbauteil ausgebildet ist.

10. Lenkerkonstruktion (1) nach einem der vorhergehenden Ansprüche, **dadurch gekennzeichnet, dass** der erste Lagerabschnitt (2a) einen im Wesentlichen ösenförmigen Teilabschnitt (2y) aufweist und/oder ein Elastomerlager trägt.

11. Lenkerkonstruktion (1) nach einem der vorhergehenden Ansprüche, **dadurch gekennzeichnet, dass** der Schlitz (5a) die Wandung des Hohlprofil-Elements durchstößt.

12. Lenkerkonstruktion (1) nach einem der vorhergehenden Ansprüche, **dadurch gekennzeichnet, dass** ein Schlitzgrund (7a) des Schlitzes (5a) abgerundet, tropfenförmig und/oder im Wesentlichen kreis- oder halbkreisförmig ausgeführt ist.

13. Lenkerkonstruktion (1) nach einem der vorhergehenden Ansprüche, **dadurch gekennzeichnet, dass** der Faserkunststoffverbund ein längsverstärktes, quasiisotropes Laminat umfasst.

14. Lenkerkonstruktion (1) nach einem der vorhergehenden Ansprüche, **dadurch gekennzeichnet, dass** im Verbindungsbereich (4a) zur Verbindung des ersten Lagerabschnitts (2a) und des Kopplungselements (3) eine Dehnschraube angeordnet ist, insbesondere zur Reduzierung von Setzungserscheinungen.

15. Lenkerkonstruktion (1) nach einem der vorhergehenden Ansprüche, **dadurch gekennzeichnet, dass** im Verbindungsbereich (4b) zur Verbindung des zweiten Lagerabschnitts (2b) und des Kopplungselements (3) zumindest ein Schlitz (5b) ausgebildet ist.

16. Kraftfahrzeug, mit zumindest einer Lenkerkonstruktion (1) nach einem der vorhergehenden Ansprüche.

## Claims

1. Suspension arm construction (1) for a motor vehicle, preferably trailing arm construction (1), having a first bearing section (2a), a second bearing section (2b) and a coupling element (3) which extends between the first bearing section (2a) and the second bearing section (2b) and serves for the connection of the first bearing section (2a) and the second bearing section (2b), the coupling element (3) being configured from a fibre plastic composite and being configured as a hollow profile element,
- at least one slot (5a) being configured in the connecting region (4a) for the connection of the first bearing section (2a) and the coupling element (3),
- a clamp (6a) for fixing the first bearing section (2a) on the coupling element (3) being arranged in the connecting region (4a) for the connection of the first bearing section (2a) and the coupling element (3),
**characterized in that**
- the first bearing section (2a) and the coupling element (3) are adhesively bonded and/or pressed to one another, and the clamp (6a) serves to fix the adhesive bond and/or pressed connection.

2. Suspension arm construction (1) according to Claim 1, **characterized in that** the first bearing section (2a) and the coupling element (3) are pushed onto one another and/or overlap in sections.

3. Suspension arm construction (1) according to Claim 1 or Claim 2, **characterized in that** the first bearing section (2a) comprises a part section (2x), and the part section (2x) extends into the coupling element (3) and is preferably of hollow profile-shaped configuration.

4. Suspension arm construction (1) according to one of the preceding claims, **characterized in that** the slot (5a) is configured in the coupling element (3) and/or extends inwards from a front side of the coupling element (3).

5. Suspension arm construction (1) according to one of the preceding claims, **characterized in that** the slot (5a) extends substantially parallel to the longitudinal extent of the coupling element (3) or obliquely with respect to the longitudinal extent of the coupling element (3).

6. Suspension arm construction (1) according to one of the preceding claims, **characterized in that** the connecting region (4a) for the connection of the first bearing section (2a) and the coupling element (3) comprises an axial end side section or front side section of the coupling element (3).

7. Suspension arm construction (1) according to one of the preceding claims, **characterized in that** the first bearing section (2a) and/or the second bearing section (2b) are/is configured from metallic material, preferably from aluminium or an aluminium alloy.

8. Suspension arm construction (1) according to one of the preceding claims, **characterized in that** the coupling element (3) is manufactured by means of pultrusion.

9. Suspension arm construction (1) according to one of the preceding claims, **characterized in that** the clamp (6a) is configured from a fibre plastic composite, and is configured as a milled component or sheet metal component.

10. Suspension arm construction (1) according to one of the preceding claims, **characterized in that** the first bearing section (2a) has a substantially eyelet-shaped part section (2y) and/or carries an elastomeric bearing.

11. Suspension arm construction (1) according to one of the preceding claims, **characterized in that** the slot (5a) penetrates the wall of the hollow profile element.

12. Suspension arm construction (1) according to one of the preceding claims, **characterized in that** a slot bottom (7a) of the slot (5a) is of rounded, droplet-shaped and/or substantially circular or semicircular configuration.

13. Suspension arm construction (1) according to one of the preceding claims, **characterized in that** the fibre plastic composite comprises a longitudinally reinforced, quasi-isotropic laminate.

14. Suspension arm construction (1) according to one of the preceding claims, **characterized in that** an anti-fatigue bolt is arranged in the connecting region (4a) for the connection of the first bearing section (2a) and the coupling element (3), in particular in order to reduce settling phenomena.

15. Suspension arm construction (1) according to one of the preceding claims, **characterized in that** at least one slot (5b) is configured in the connecting region (4b) for the connection of the second bearing section (2b) and the coupling element (3).

16. Motor vehicle, having at least one suspension arm construction (1) according to one of the preceding claims.

## Revendications

1. Structure de bras de suspension (1) pour un véhicule automobile, de préférence structure de bras de suspension longitudinal (1), comprenant une première partie de palier (2a), une deuxième partie de palier (2b) et un élément d'accouplement (3) qui s'étend entre la première partie de palier (2a) et la deuxième partie de palier (2b) et sert à la liaison de la première partie de palier (2a) et de la deuxième partie de palier (2b), dans laquelle l'élément d'accouplement (3) est réalisé à partir d'un composite en matière synthétique renforcée par des fibres et sous la forme d'un élément formant profilé creux, dans laquelle
- au moins une fente (5a) est formée dans la région de liaison (4a) servant à la liaison de la première partie de palier (2a) et de l'élément d'accouplement (3),
- un collier de serrage (6a) servant à la fixation de la première partie de palier (2a) à l'élément d'accouplement (3) est disposé dans la région de liaison (4a) servant à la liaison de la première partie de palier (2a) et de l'élément d'accouplement (3),
**caractérisée en ce que**
- la première partie de palier (2a) et l'élément d'accouplement (3) sont collés et/ou comprimés entre eux et le collier de serrage (6a) sert à la fixation de la liaison par collage et/ou à ajustement serré.

2. Structure de bras de suspension (1) selon la revendication 1, **caractérisée en ce que** la première partie de palier (2a) et l'élément d'accouplement (3) sont poussés l'un sur l'autre et/ou se chevauchent sur certaines parties.

3. Structure de bras de suspension (1) selon la revendication 1 ou la revendication 2, **caractérisée en ce que** la première partie de palier (2a) comporte une partie partielle (2x) et la partie partielle (2x) s'étend à l'intérieur de l'élément d'accouplement (3) et est configurée de préférence sous forme de profilé creux.

4. Structure de bras de suspension (1) selon l'une des revendications précédentes, **caractérisée en ce que** la fente (5a) est formée dans l'élément d'accouplement (3) et/ou s'étend vers l'intérieur à partir d'un côté frontal de l'élément d'accouplement (3).

5. Structure de bras de suspension (1) selon l'une des revendications précédentes, **caractérisée en ce que** la fente (5a) s'étend sensiblement parallèlement à l'étendue longitudinale de l'élément d'accouplement (3) ou de manière inclinée par rapport à l'étendue longitudinale de l'élément d'accouplement (3).

6. Structure de bras de suspension (1) selon l'une des revendications précédentes, **caractérisée en ce que** la région de liaison (4a) servant à la liaison de la première partie de palier (2a) et de l'élément d'accouplement (3) comporte une partie axiale d'extrémité ou de côté frontal de l'élément d'accouplement (3).

7. Structure de bras de suspension (1) selon l'une des revendications précédentes, **caractérisée en ce que** la première partie de palier (2a) et/ou la deuxième partie de palier (2b) sont réalisées à partir d'un matériau métallique, de préférence à partir d'aluminium ou d'un alliage d'aluminium.

8. Structure de bras de suspension (1) selon l'une des revendications précédentes, **caractérisée en ce que** l'élément d'accouplement (3) est fabriqué par pultrusion.

9. Structure de bras de suspension (1) selon l'une des revendications précédentes, **caractérisée en ce que** le collier de serrage (6a) est réalisé à partir d'un composite en matière synthétique renforcée par des fibres, est réalisé en tant que pièce fraisée ou pièce en tôle.

10. Structure de bras de suspension (1) selon l'une des revendications précédentes, **caractérisée en ce que** la première partie de palier (2a) comprend une partie partielle (2y) sensiblement en forme d'oeillet et/ou supporte un élastomère.

11. Structure de bras de suspension (1) selon l'une des revendications précédentes, **caractérisée en ce que** la fente (5a) pénètre la paroi de l'élément formant profilé creux.

12. Structure de bras de suspension (1) selon l'une des revendications précédentes, **caractérisée en ce qu'**un fond (7a) de la fente (5a) est configuré de manière arrondie, en forme de goutte et/ou sensiblement de manière circulaire ou semi-circulaire.

13. Structure de bras de suspension (1) selon l'une des revendications précédentes, **caractérisée en ce que** le composite en matière synthétique renforcée par des fibres comporte un stratifié quasiisotrope renforcé longitudinalement.

14. Structure de bras de suspension (1) selon l'une des revendications précédentes, **caractérisée en ce qu'**une vis d'extension est disposée dans la région de liaison (4a) servant à la liaison de la première partie de palier (2a) et de l'élément d'accouplement (3), en particulier pour la réduction de phénomènes de tassement.

15. Structure de bras de suspension (1) selon l'une des revendications précédentes, **caractérisée en ce qu'**au moins une fente (5b) est formée dans la région de liaison (4b) servant à la liaison de la deuxième partie de palier (2b) et de l'élément d'accouplement (3).

16. Véhicule automobile, comprenant au moins une structure de bras de suspension (1) selon l'une des revendications précédentes.
